Europäisches Patentamt

European Patent Office

Office européen des brevets

(19)

(11) Veröffentlichungsnummer : **0 330 884 B1**

(12)          **EUROPÄISCHE PATENTSCHRIFT**

(45) Veröffentlichungstag der Patentschrift :
13.11.91 Patentblatt 91/46

(51) Int. Cl.⁵ : **B60Q 1/06, F21M 3/20**

(21) Anmeldenummer : **89102304.6**

(22) Anmeldetag : **10.02.89**

(54) **Fahrzeugscheinwerfer.**

(30) Priorität : **03.03.88 DE 8802829 U**

(43) Veröffentlichungstag der Anmeldung :
**06.09.89 Patentblatt 89/36**

(45) Bekanntmachung des Hinweises auf die
Patenterteilung :
**13.11.91 Patentblatt 91/46**

(84) Benannte Vertragsstaaten :
**DE ES FR GB IT SE**

(56) Entgegenhaltungen :
**DE-A- 3 722 581**
**DE-U- 8 313 450**
**FR-A- 2 389 513**

(73) Patentinhaber : **Hella KG Hueck & Co.**
**Rixbecker Strasse 75 Postfach 28 40**
**W-4780 Lippstadt (DE)**

(72) Erfinder : **Ewert, Alfred**
**Mercklinghausstrasse 88**
**W-4780 Lippstadt (DE)**
Erfinder : **Kathmann, Franz**
**Robert-Koch-Strasse 36**
**W-4780 Lippstadt (DE)**

**Beschreibung**

Die Erfindung bezieht sich auf einen Fahrzeugscheinwerfer, mit den Merkmalen :

— der Reflektor ist in einem von Gehäuse und Lichtscheibe eingesetzten Innenraum angeordnet,

— der Reflektor ist um zwei senkrecht aufeinanderstehende Achsen verschwenkbar und in zwei verstellbaren Schwenkpunkten und einem dritten Schwenkpunkt gelagert,

— ein verstellbarer Schwenkpunkt wird von einem Bolzen gebildet, welcher lösbar in einem starr mit dem Reflektor verbundenen Aufnahmeteil arretiert ist,

— der Bolzen ist in einem ringförmigen elastischen Wandungsabschnitt des Gehäuses eingesetzt,

— der aus dem Gehäuse herausragende Endabschnitt des Bolzens ist mit einer manuell verstellbaren Einstellschraube gekoppelt, deren Längsachse etwa parallel zur optischen Achse verläuft und deren in Lichtaustrittsrichtung weisender Endabschnitt verdrehbar in der Öffnung einer äußeren Gehäusewandung gelagert ist.

Ein solcher Scheinwerfer ist aus dem DE-U-8313450 bekannt. Die Längsachse des in den ringförmigen elastischen Wandungsabschnitt eingespannten Bolzens verläuft etwa senkrecht zur Längsachse der an der Außenseite des Gehäuses angeordneten Einstellschraube bzw. senkrecht zur optischen Achse des Scheinwerfers. Der frei aus dem Gehäuse herausragende Endabschnitt des Bolzens weist eine Mutter auf, in welche die Einstellschraube eingreift, während der in das Innere des Gehäuses ragende Endabschnitt einen Kugelkopf aufweist, welcher in einer Hülse des Aufnahmeteils eingreift, deren Längsachse mit der Längsachse des Bolzens fluchtet. Bei einer solchen Lösung bildet die Einspannstelle des Bolzens in dem elastischen ringförmigen Wandungsabschnitt den Drehpunkt. Der Bolzen ist somit ein zweiseitig wirkender Hebel.

Besteht der ringförmige elastische Wandungsabschnitt aus einem sehr elastischen Werkstoff, so ist für das manuelle Verstellen des Scheinwerfers eine relativ kleine Kraft notwendig, jedoch vibriert dann der Reflektor während des Fahrbetriebs. Außerdem ist es bei einem solchen Scheinwerfer nicht möglich, nachträglich das Stellglied einer Leuchtweiteregelungsanlage zu montieren.

Aufgabe der Erfindung ist es, den im Gattungsbegriff beschriebenen Scheinwerfer so zu verbessern, daß der in einem ringförmigen elastischen Wandungsabschnitt eingespannte Bolzen leicht und schnell gegen einen Bolzen des Stellgliedes einer Leuchtweiteregelungsanlage ausgewechselt werden kann, ohne daß die Lichtscheibe vom Gehäuse abgenommen werden muß. Außerdem soll der Bolzen des Stellgliedes weiterhin auch manuell verstellbar und relativ vibrationsfrei gelagert sein. Darüber hinaus soll sowohl die manuelle Einstellung als auch die automatische Einstellung des Reflektors durch das Stellglied mit einer relativ kleinen Kraft möglich sein. Diese Aufgabe wird nach der Erfindung dadurch gelöst, daß

— die Längsachse des Bolzens etwa parallel zur Längsachse der Einstellschraube verläuft,

— der Bolzen unter Zwischenschaltung einer an der Außenseite des Gehäuse verschiebbar geführten Brücke mit der Einstellschraube gekoppelt ist,

— die Brücke das einzige tragende Element für den Bolzen ist und der ringförmige elastische Wandungsabschnitt ausschließlich eine Abdichtungsfunktion für den Bolzen gegenüber dem Gehäuse hat.

Bei einer solchen Lösung kann das Stellglied einer Leuchtweiteregelungsanlage nachträglich in die an der Außenseite des Gehäuses verschiebbar geführte Brücke eingesetzt werden.

Weiterhin ist es vorteilhaft, wenn als ringförmiger elastischer Wandungsabschnitt ein Faltenbalg oder eine Rollmembran dient. Ein solcher Faltenbalg oder eine solche Rollmembran ist im Handel erhältlich. Außerdem ist für ihre Verstellung des Faltenbalgs bzw. der Rollmembran nur eine relativ geringe Kraft notwendig. Darüber hinaus ist der Bolzen gegenüber dem Gehäuse sicher abgedichtet.

Ein weiterer Vorteil ist es, wenn in die Brücke eine Öffnung eingebracht ist, in die das Stellglied einer Leuchtweiteregelungsanlage einsetzbar ist. In die Öffnung, in die das Stellglied einsetzbar ist, kann auch ein mit einem Bolzen starr verbundenes Befestigungselement eingesetzt werden. Ferner ist es möglich, eine Brücke, in die ein Bolzen klemmend eingesetzt ist, gegen eine Brücke auszutauschen, die eine Öffnung für ein Stellglied aufweist.

Bei einem Scheinwerfer, dessen verstellbarer Schwenkpunkt von einem am freien Ende des Bolzens angeordneten Kugelkopf und einer Hülse des Aufnahmeteils gebildet wird, deren Längsachse etwa senkrecht zur Längsachse der Einstellschraube verläuft, ist es weiterhin sehr vorteilhaft, wenn die Hülse, auf der der Gehäuserückseite zugewandten Seite einen in Richtung ihrer Längsausdehnung verlaufenden Schlitz aufweist, durch den der Bolzen hindurchragt. Bei einer solchen Lösung kann der Kugelkopf ruckfrei aus der Hülse herausgeschwenkt werden bzw. in sie hineingeschwenkt werden. Dadurch ist bei einer korrekten Demontage bzw. Montage des Bolzens keine Beschädigung des Scheinwerfers an seinen Lagerstellen möglich. Bei der Montage bzw. Demontage des Bolzens ist es nach einem Lösen der Halterung des Bolzens an der Brücke bzw. nach dem Herausziehen der Brücke aus ihrer Führung sehr hilfreich, wenn der Reflektor z.B. durch die dem Glühlampenwechsel dienende Öffnung des Gehäuses zur Gehäuserückseite hin gezogen wird.

In diesem Zusammenhang ist es weiterhin vorteilhaft, wenn die Längsachse der Hülse senkrecht zu der horizontalen Schwenkachse des Reflektors verläuft. Dadurch kann bei einem Schwenken des Reflektors um die horizontale Achse die Hülse seiner Schwenkbewegung folgen, so daß keine Verspannungen zwischen dem Gehäuse und dem Reflektor auftreten können. Weiterhin ist es zweckmäßig, wenn die Hülse an ihrem geschlossenen Ende eine schlitzartige Öffnung aufweist, die in Richtung, in der sich der Bolzen erstreckt geöffnet ist. Bei einer solchen Lösung kann der Kugelkopf des Bolzens in Einsetzrichtung des Reflektors in die Hülse eingedrückt werden. Dies ist besonders bei einer automatischen Fertigung vorteilhaft.

Die Erfindung ist in der Zeichnung dargestellt und zwar zeigt die

Figur 1 einen mittleren Längsschnitt durch einen manuell verstellbaren Schwenkpunkt eines Scheinwerfers

Figur 2 einen mittleren Längsschnitt durch den in Figur 1 dargestellten Scheinwerfer mit dem Stellglied einer Leuchtweiteregelungsanlage,

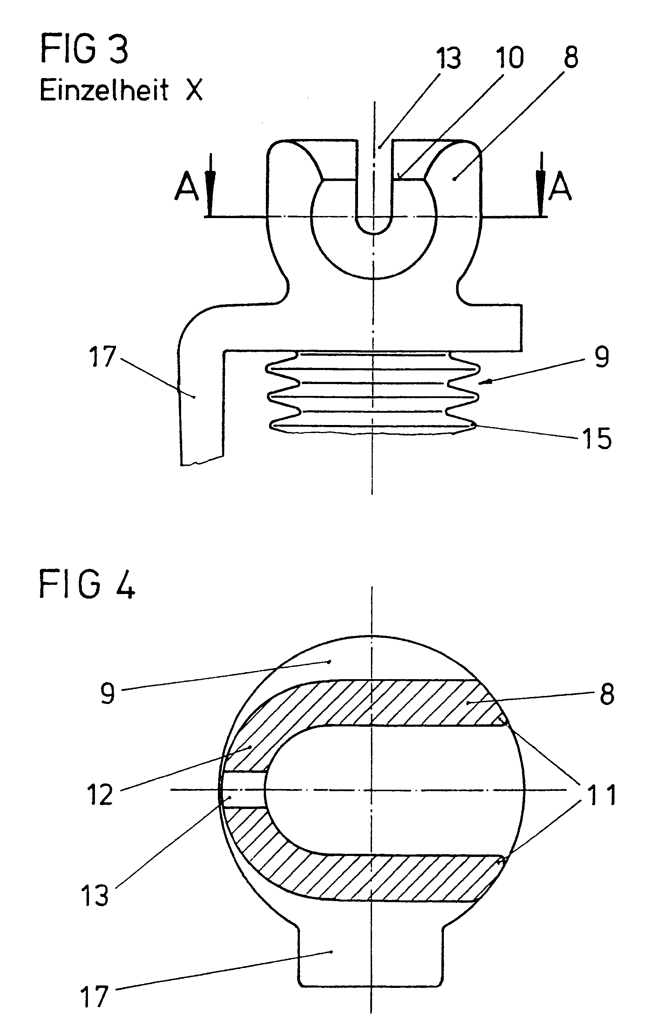

Figur 3 eine Einzelheit bei X, ohne den verstellbaren Bolzen und

Figur 4 einen Schnitt nach der Linie A-A.

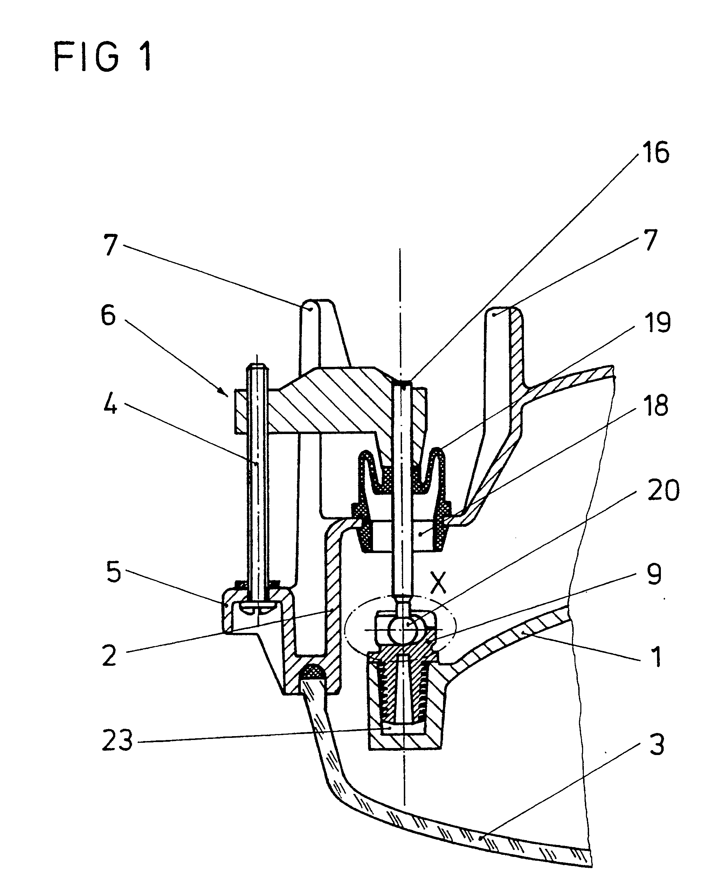

In der Zeichnung ist der Reflektor (1) in einem von Gehäuse (2) und Lichtscheibe (3) gebildeten Innenraum angeordnet und in diesem um zwei senkrecht zueinander verlaufende Achsen verschwenkbar. Die Achsen werden von zwei verstellbaren Schwenkpunkten (von denen einer dargestellt ist) und einem ortsfesten Schwenkpunkt (nicht dargestellt) gebildet. Die Einstellschraube ist mit einem Endabschnitt verdrehbar in der Öffnung einer äußeren Gehäusewandung (5) gelagert und ist mit ihrem entgegen der Lichtaustrittsrichtung weisenden Endabschnitt in ein Gewindeloch der Brücke (6) eingeschraubt. Die Brücke (6) ist durch die Einstellschraube (4) in einer an die Gehäuserückseite angeformten Führung (7) verschiebbar. Bei dem in Figur 1 dargestellten Scheinwerfer ist in eine Öffnung der Brücke (6) der Bolzen (16) mit einem freien Endabschnitt selbstklemmend eingesetzt. Die Längsachse des Bolzens verläuft parallel zur Längsachse der Einstellschraube (4). Der Bolzen (16) ragt durch eine Öffnung (18) in der Gehäuserückseite in den Innenraum des Scheinwerfers hinein. Auf den Bolzen ist klemmend eine aus elastischem Werkstoff hergestellte Rollmembran (19) aufgeschoben, die mit ihrem äußeren Rand dicht in die Öffnung (18) des Gehäuses eingesetzt ist. Das freie Ende des Bolzens (16) im Innenraum des Scheinwerfers trägt einen Kugelkopf (20), der in der Hülse (8) des starr mit dem Reflektor verbundenen Aufnahmeteils (9) eingesetzt ist. Die Längsachse der Hülse (8) verläuft senkrecht zur Längsachse des Bolzens (16). In die der Gehäuserückseite zugewandten Seite der Mantelfläche der Hülse (8) ist ein Schlitz (10) eingebracht, durch den der Bolzen (16) hindurchragt. Die Hülse (8) ist an einem freien Ende ohne verbleibenden Innenrand geöffnet, während das andere geschlossene freie Ende eine schlitzartige Öffnung (13) aufweist, die in der Richtung, in der sich der Bolzen (16) erstreckt, geöffnet ist. Das Aufnahmeteil (9) ist bolzenförmig ausgeführt und verjüngt sich zu seinem freien Ende hin konisch. Das bolzenförmige Aufnahmeteil (9) ist in eine Vertiefung (23) klemmend eingesetzt. Die Mantelfläche des bolzenförmigen Aufnahmeteils (9) weist umlaufende Rippen (15) auf, die mit ihrer Stirnfläche unter Vorspannung an der Innenseite der Vertiefung anliegen. Im mittleren Bereich des bolzenförmigen Aufnahmeteils ist eine federnde Zunge (17) angeformt, die mit einer an ihrem freien Ende angeformten Rastnase (nicht dargestellt) in eine Hinterschneidung des Reflektors eingreift.

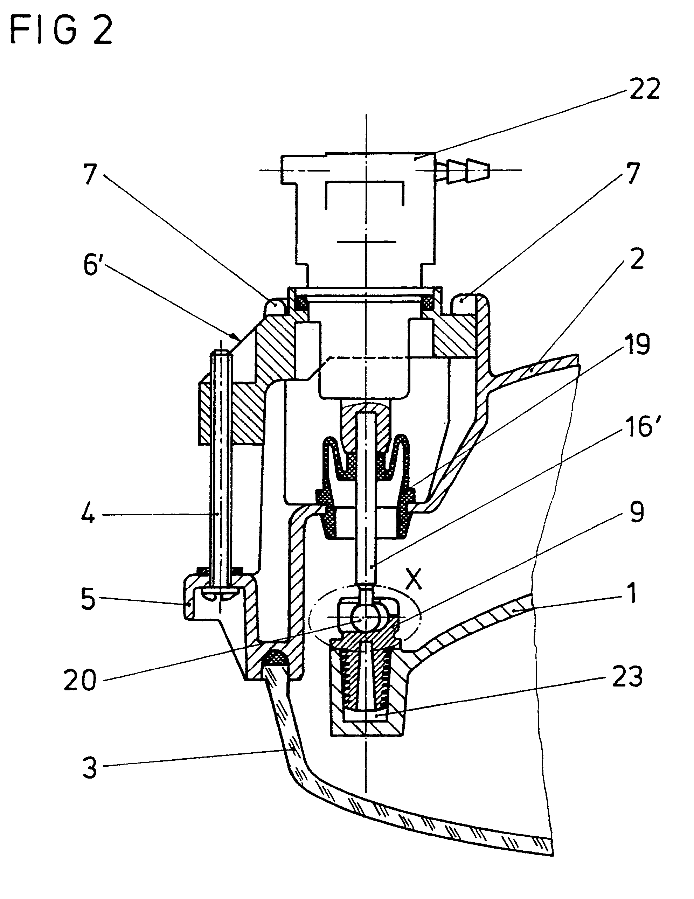

In Figur 2 der Zeichnung ist der Scheinwerfer dargestellt, bei dem nachträglich das Stellglied (22) einer Leuchtweiteregelungsanlage montiert ist. Das Stellglied ist in die Öffnung der Brücke (6') eingesetzt. Ein nachträgliches Einsetzen des Stellgliedes ist von der Scheinwerferrückseite her sehr einfach und schnell möglich. Dabei ist lediglich die in Figur 1 dargestellte Brücke mit dem in sie klemmend eingesetzten Bolzen zu demontieren und durch die Brücke (6'), in deren Öffnung das Stellglied einsetzbar ist, zu ersetzen. Bei der Demontage ist zuerst die Brücke aus der Verschraubung der Einstellschraube zu lösen. In einem zweiten Schritt ist die Brücke aus der Führung (10) des Gehäuses herauszunehmen. Danach kann der Kugelkopf des starr mit der Brücke verbundenen Bolzens aus der Hülse (8) herausgeschwenkt werden und zusammen mit der Rollmembran (19) aus der Gehäuseöffnung herausgezogen werden. Die Montage der Brücke (6') erfolgt in umgekehrter Reihenfolge.

**Patentansprüche**

1. Fahrzeugscheinwerfer mit den Merkmalen,
— der Reflektor (1) ist in einem vom Gehäuse (2) und Lichtscheibe (3) gebildeten Innenraum angeordnet,
— der Reflektor (1) ist um zwei senkrecht aufeinanderstehende Achsen verschwenkbar und in zwei verstellbaren Schwenkpunkten und einem dritten Schwenkpunkt gelagert,
— ein verstellbarer Schwenkpunkt wird von einem Bolzen (16, 16') gebildet, welcher lösbar in einem starr mit dem Reflektor (1) verbundenen Aufnahmeteil (9) arretiert ist,
— der Bolzen ist in einen ringförmigen elastischen Wandungsabschnitt (19) des Gehäuses (2) eingesetzt,
— der aus dem Gehäuse (2) herausragende Endabschnitt des Bolzens (16, 16') ist mit einer manuell verstellbaren Einstellschraube (4) gekoppelt, deren Längsachse etwa parallel zur optischen Achse verläuft und deren in Lichtaustrittsrichtung weisende Endabschnitt verdrehbar in der Öffnung einer äußeren Gehäusewandung (5) gelagert ist, dadurch gekennzeichnet, daß

— die Längsachse des Bolzens (16) etwa parallel zur Längsachse der Einstellschraube (4) verläuft,

— der Bolzen (16) unter Zwischenschaltung einer an der Außenseite des Gehäuses (2) verschiebbar geführten Brücke (6, 6') mit der Einstellschraube (4) gekoppelt ist,

— die Brücke (6, 6') das einzige tragende Element für den Bolzen (16, 16') ist und der ringförmige elastische Wandungsabschnitt (19) ausschließlich eine Abdichtungsfunktion für den Bolzen (16, 16') gegenüber dem Gehäuse (2) hat.

2. Scheinwerfer nach Anspruch 1, dadurch gekennzeichnet, daß als ringförmiger elastischer Wandungsabschnitt (19) ein Faltenbalg oder eine Rollmembran dient.

3. Scheinwerfer nach Anspruch 1 oder 2, dadurch gekennzeichnet, daß in die Brücke (6') eine Öffnung eingebracht ist, in die das Stellglied (22) einer Leuchtweiteregelungsanlage einsetzbar ist.

4. Scheinwerfer nach Anspruch 1, dessen verstellbarer Schwenkpunkt von einem am freien Ende des Bolzens (16) angeordneten Kugelkopf (20) und einer Hülse (8) des Aufnahmeteils (9) gebildet wird, deren Längsachse etwa senkrecht zur Längsachse der Einstellschraube (4) verläuft, dadurch gekennzeichnet, daß der Hülse (8) auf der der Gehäuserückseite zugewandten Seite einen in Richtung ihrer Längsausdehnung verlaufenden Schlitz (10) aufweist, durch den der Bolzen (16, 16') hindurchragt.

5. Scheinwerfer nach Anspruch 4, dadurch gekennzeichnet, daß die Längsachse der Hülse (8) senkrecht zu der horizontalen Schwenkachse des Reflektors (1) verläuft.

6. Scheinwerfer nach Anspruch 4 oder 5, dadurch gekennzeichnet, daß fir Hülse (8) an ihrem geschlossenen Ende eine schlitzartige Öffnung (13) aufweist, die in der Richtung, in der sich der Bolzen (16, 16') erstreckt, geöffnet ist.

ing part (9) connected rigidly to the reflector (1),

— the bolt is fitted into an annular resilient wall section (19) of the casing (2),

— the end section of the bolt (16, 16') projecting from the casing (2) is coupled to a manually adjustable setting screw (4), the longitudinal axis of which runs approximately parallel to the optical axis and the end section of which, pointing in the direction in which the light leaves, is mounted rotatably in the opening of an outer casing wall (5), characterised in that

— the longitudinal axis of the bolt (16) runs approximately parallel to the longitudinal axis of the setting screw (4),

— the bolt (16) is coupled to the setting screw (4) with the interposition of a bridge (6, 6') guided displaceably on the outer side of the casing (2),

— the bridge (6, 6') is the only supporting element for the bolt (16, 16'), and the only function of the annular resilient wall section (19) is to seal the bolt (16, 16') with respect to the casing (2).

2. Headlamp according to Claim 1, characterised in that an expansion bellows or a rolling diaphram serves as the annular resilient wall section (19).

3. Headlamp according to Claim 1 or 2, characterised in that an opening, into which the adjusting member (22) of a beam-width-regulating system can be fitted, is formed in the bridge (6').

4. Headlamp according to Claim 1, the adjustable pivot point of which is formed by a spherical head (20) arranged at the free end of the bolt (16) and by a sleeve (8) of the receiving part (9), the longitudinal axis of which runs approximately parallel to the longitudinal axis of the setting screw (4), characterised in that the sleeve (8) has, on the side facing towards the rear of the casing, a slot (10) which runs in its longitudinal extension and through which the bolt (16, 16') projects.

5. Headlamp according to Claim 4, characterised in that the longitudinal axis of the sleeve (8) runs perpendicular to the horizontal pivot axis of the reflector (1).

6. Headlamp according to Claim 4 or 5, characterised in that the sleeve (8) has, at its closed end, a slot-like opening (13) which is open in the direction in which the bolt (16, 16') extends.

## Claims

1. Vehicle headlamp with the features,

— the reflector (1) is arranged in an internal space formed by the casing (2) and the lamp glass (3),

— the reflector (1) can pivot about two axes perpendicular to each other and is mounted in two adjustable pivot points and a third pivot point,

— an adjustable pivot point is formed by a bolt (16, 16') which is retained detachably in a receiv-

## Revendications

1. Projecteur de véhicule présentant les particularités suivantes :

— le réflecteur (1) est disposé dans un volume intérieur délimité par un boîtier (2) et un diffuseur (3),

— le réflecteur (1) est monté pour pouvoir pivoter autour de deux axes perpendiculaires entre eux, sur deux points d'articulation réglables et sur un troisième point d'articulation,

— un point d'articulation réglable est formé par un doigt (16, 16') qui est bloqué par une liaison démontable dans un élément récepteur (9) fixé rigidement au réflecteur (1),

— le doigt est logé dans un segment de paroi annulaire élastique (19) du boîtier (2),

— le segment terminal du doigt (16, 16') qui émerge du boîtier (2) est couplé à une vis de réglage (4) pouvant être manoeuvrée manuellement, dont l'axe longitudinal s'étend à peu près parallèlement à l'axe optique et dont le segment terminal regardant dans le sens de la sortie de la lumière est monté rotatif dans l'ouverture d'une paroi extérieure (5) du boîtier, caractérisé en ce que

— l'axe longitudinal du doigt (16, 16') s'étend à peu près parallèlement à l'axe longitudinal de la vis de réglage (4),

— le doigt (16) est couplé à la vis de réglage (4) avec interposition d'un coulisseau (6, 6') guidé mobile en translation le long d'une surface extérieure du boîtier (2) ;

— le coulisseau (6, 6') constitue l'unique élément porteur du doigt (16, 16') et le segment de paroi annulaire élastique (19) exerce exclusivement une fonction de fermeture étanche pour le doigt (16, 16') par rapport au boîtier (2).

2. Projecteur selon la revendication 1, caractérisé en ce qu'on utilise comme segment de paroi annulaire élastique (19) un soufflet plissé ou une membrane roulante.

3. Projecteur selon la revendication 1 ou 2, caractérisé en ce que, dans le coulisseau (6'), est ménagée une ouverture dans laquelle peut être emboîté l'actionneur (22) d'un correcteur d'angle de site.

4. Projecteur selon la revendication 1, dont le point d'articulation réglable est formé par une tête sphérique prévue à l'extrémité libre du doigt (16, 16') et par un manchon (8) de l'élément récepteur (9), dont l'axe longitudinal s'étend à peu près perpendiculairement à l'axe longitudinal de la vis de réglage (4), caractérisé en ce que le manchon (8) présente, sur la face qui est dirigée vers l'arrière du boîtier, une fente (10) s'étendant parallèlement à son extension longitudinale, et à travers laquelle passe le doigt (16, 16').

5. Projecteur selon la revendication 4, caractérisé en ce que l'axe longitudinal du manchon (8) s'étend perpendiculairement à l'axe de pivotement horizontal du réflecteur (1).

6. Projecteur selon la revendication 4 ou 5, caractérisé en ce que le manchon (8) présente, à son extrémité fermée, une ouverture (13) en forme de fente qui s'ouvre dans le sens dans lequel s'étend le doigt (16, 16').

# FIG 1

# FIG 2

# FIG 3
## Einzelheit X

13   10   8

A ↓ ↓ A

17

9

15

# FIG 4

9

12

13

17

8

11